(19) Europäisches Patentamt / European Patent Office / Office européen des brevets

(11) **EP 3 037 471 B2**

(12) **NEW EUROPEAN PATENT SPECIFICATION**
After opposition procedure

(45) Date of publication and mention
of the opposition decision:
**22.01.2025   Bulletin 2025/04**

(45) Mention of the grant of the patent:
**01.05.2019   Bulletin 2019/18**

(21) Application number: **14199663.7**

(22) Date of filing: **22.12.2014**

(51) International Patent Classification (IPC):
**C08L 23/04** (2006.01)        **C08L 23/06** (2006.01)

(52) Cooperative Patent Classification (CPC):
**C08L 23/04; C08L 23/06**

(54) **Process for producing multimodal polyethylene compositions**

Verfahren zur Herstellung von multimodalen Polyethylenzusammensetzungen

Procédé de production de compositions de polyéthylène multimodal

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.06.2016   Bulletin 2016/26**

(73) Proprietor: **Borealis AG**
**1020 Vienna (AT)**

(72) Inventors:
• **Qizheng, Dou**
**4020 Linz (AT)**

• **Albunia, Alexandra Romina**
**4200 Linz (AT)**
• **Liu, Yi**
**4209 Engerwitzdorf (AT)**

(74) Representative: **Kador & Partner Part mbB**
**Corneliusstraße 15**
**80469 München (DE)**

(56) References cited:
**EP-A1- 1 909 014        EP-A1- 2 743 305**
**WO-A1-02/26880        WO-A1-2014/095917**

Processed by Luminess, 75001 PARIS (FR)

**Description**

**Field of the Invention**

The present application relates to a process for producing a multimodal polyethylene composition with an ultra-high molecular weight component by melt-blending the ultra-high component in form of a master batch. The resultant multimodal polyethylene composition shows improved sagging resistance and minimum degradation during melt-blending.

**Problem to Be Solved**

In multimodal polyethylene resins the high molecular weight component usually with comonomer incorporation is responsible for the strength, including long term strength and how well this component is incorporated in the total polymer mass is the key for the final product properties, in particular for high-strength and high performance products such as PE100 or PE100+ pipe resins, high-end film resins or blow moulding resins.

Thus, there is still a need for methods to incorporate ultra-high molecular weight components into multimodal polyethylene resins as such that a homogeneous blend with a minimum of UHMW particles, so-called white spots is obtained at a minimum degradation of the polymer chains.

Multimodal polyethylene compositions suitable for making large-diameter pipes with good resistance against sagging were disclosed in WO-A-00/22040. The compositions contained from 35 to 55 % by weight of the low molecular weight component and from 45 to 65 % by weight of the high molecular weight component.

WO-A-2007/022908 discloses trimodal polyethylene moulding compositions suitable for making pipes. The material has good mechanical properties and a low tendency to undergo creep. The composition contains from 45 to 55 % by weight of a low molecular weight homopolymer, from 20 to 40 % by weight of a high molecular weight copolymer and from 15 to 30 % by weight of an ultra-high molecular weight ethylene copolymer.

US-A-2004/0005424 discloses a process where pipes with improved sagging resistance were obtained by blending from 55 to 75 % by weight of a first bimodal polyethylene resin with from 25 to 45 % by weight of a second bimodal polyethylene resin.

EP 2 743 305 A1 discloses a mechanical blend of 55 to 95 wt% of a high density multimodal polyethylene component having a density of at least 940 kg/m$^3$ and 5 to 45 wt% of an ultra-high molecular weight polyethylene homopolymer having a nominal viscosity molecular weight Mv of 1,000,000 to 4,000,000 g/mol which has a MFR$_{21}$ of 10.0 g/10 min or less and a density of at least 940 kg/m$^3$ and is suitable for the production of pipes meeting the requirements of PE125 without sag.

In spite of the methods disclosed in the prior art there still exists a need for a process being able to produce multimodal HDPE compositions having a broad molecular weight distribution which process is stable and reliable to operate and where the polymer powder has good handling properties.

The objective of the present invention is thus to overcome the problems of prior art processes and to provide a process which allows the production of ethylene polymer compositions having a low tendency for sagging and which process can be operated economically.

**Summary of the Invention**

**Detailed Description**

Definitions

The present invention provides a process for producing a multimodal polyethylene composition comprising the following steps: (i) introducing a first polyethylene resin (A) having a weight average molecular weight Mw of from 150 to 3000 kg/mol and MFR$_5$ of not more than 60 g/10 min and comprising from 10 to 90 % of an ultra-high molecular weight polyethylene (A-1) having viscosity average molecular weight of at least 700 kg/mol into a feed port of an extruder; (ii) introducing a second polyethylene resin (B) having MFR$_5$ of from 0.15 to 1.0 g/10 min and a density of equal to or more than 945 kg/m$^3$ to equal to or less than 970 kg/m$^3$ into a feed port of the extruder; (iii) melting and mixing the first polyethylene resin (A) and the second polyethylene resin (B) in the extruder to form a multimodal polyethylene composition; (iv) recovering the multimodal polyethylene composition from the extruder; and (v) cooling and solidifying the multimodal polyethylene composition, wherein the multimodal polyethylene composition has a melt flow rate MFR$_5$ (190°C, 5 kg) of at most 1.0 g/10 min and a density of equal to or more than 935 kg/m$^3$ to equal to or less than 965 kg/m$^3$, wherein the viscosity $\eta_{747}$ and the melt flow rate MFR$_5$ measured according to ISO 1133 at 190 °C under 5 kg load follow the relationship $\eta_{747} > 1608 - 2530 \cdot MFR_5$.

A polyethylene composition according to the present invention denotes a polymer derived from at least 50 mol-% ethylene monomer units and additional comonomer units.

The term 'homopolymer' thereby denotes a polymer consisting essentially of ethylene monomer units. Due to the requirements of large-scale polymerisation it may be possible that the ethylene homopolymer includes minor amounts of additional comonomer units, which usually are below 0.05 mol%, preferably below 0.01 mol% of the ethylene homopolymer. Accordingly, the term 'copolymer' denotes a polymer derived from ethylene monomer units and additional comonomer units in an amount of more than 0.05 mol%.

Usually, a polyethylene composition comprising at least two polyethylene components, which have been produced under different polymerisation conditions resulting in different (weight average) molecular weights for the components, is referred to as "multimodal". The prefix "multi" relates to the number of different polymer components of the composition consisting of. Thus, for example, a composition consisting of two components only is called "bimodal", whereas a composition consisting of three components is called "trimodal".

The ultra-high molecular weight (UHMW) component of the polyethylene composition is the component having a viscosity average molecular weight Mv of 700 kg/mol to 10,000 kg/mol.

The term 'base resin' denotes the polymeric part of the composition without fillers such as carbon black. A person skilled in the art will understand that the measurements as to the base resin require the presence of stabilizers.

In addition to the base resin, usual additives for utilization with polyolefins, such as pigments (e.g. carbon black), stabilizers (e.g. antioxidant agents), antacids and/or anti-UV's, antistatic agents and utilization agents (such as processing aid agents) may be present in the polyethylene composition. Preferably, the amount of these additives is 10 wt% or below, more preferably 8 wt% or below, most preferably 5 wt% or below, of the composition.

Preferably, the composition comprises carbon black in an amount of 8 wt% or below, more preferably in an amount of 1 to 4 wt%, of the total composition.

Further preferred, the amount of additives different from carbon black is 1 wt% or less, more preferably 0.5 wt% or less.

The term "blending" denotes any method for admixing components of the polyethylene composition such as polyethylene components and additives. Suitable blending methods are in situ blending, such as polymerising one polyethylene compound in the presence of another polyethylene compound, or mechanical blending, such as dry blending of solid compounds such as powders and/or pellets, melt blending of liquid compounds such as melts of polyethylene compounds or blending of a liquid compound with a solid compound. Devices for these blending methods are known in the art.

Process

The polyethylene resin (A) may be produced in any suitable method known in the art. Thus, it may be produced by feeding the components (A-1) and (A-2) as separate polymers into an extruder and melt blending them there. Alternatively, it may be produced by in-situ polymerisation.

If the polyethylene resin (A) is produced by feeding the components (A-1) and (A-2) as separate polymers into the extruder, then the components (A-1) and (A-2) are produced separately from each other. They can be in powder form or in pellet form in any combination. Thus, it is possible that both (A-1) and (A-2) are in powder form or they can be both in pellet form. Alternatively, one of the components, like (A-1), can be in powder form and the other, like (A-2), in pellet form. The components (A-1) and (A-2) are then introduced into a feed port of an extruder. They are then melted and compounded in the extruder. The polyethylene resin (A) is then recovered from the extruder after which it is optionally solidified and pelletised.

If the polyethylene resin (A) is produced by in-situ polymerisation, then the process is conducted by polymerising polyethylene components (A-1) and (A-2) at different stages of a multi-stage polymerisation process. A multi-stage polymerisation process denotes a process in which a polymer comprising two or more components is produced by polymerising each of the at least two polymer components in a separate reaction stage, usually with different reaction conditions in each stage which comprises a polymerisation catalyst. The polymer component formed in a preceding polymerisation stage is present in a subsequent polymerisation stage. The polymerisation is preferably followed by a compounding step.

It is preferred that the components (A-1) and (A-2) are polymerised at different stages of the multi-stage process in any order. It is thereby preferred that the components (A-1) and (A-2) are polymerised in subsequent stages.

It is preferred that the polyethylene resin (A) is polymerised in at least two slurry phase reactors.

In a preferred embodiment both components (A-1) and (A-2) are polymerised in slurry phase reactors, preferably loop reactors, in any order.

In any order denotes that there is no preferred order in which the subsequent polymerisation stages of the multi-stage process are arranged.

In one preferred embodiment of the process according to the invention, component (A-1) is polymerised in the first reaction stage.

It is thereby preferred that component (A-2) is polymerised in the second reaction stage in the presence of component (A-1).

Preferably, the multistage process consists of two subsequent reaction stages both conducted in slurry phase reactors. Optionally, the first reaction stage is thereby preceded by a prepolymerisation stage.

In slurry phase polymerisation the polymer particles formed in the polymerisation together with the catalyst fragmented and dispersed within the particles, are suspended in fluid hydrocarbon. The slurry phase is agitated to enable the transfer of reactants from the fluid into the particles.

The polymerisation in the slurry phase reactor usually takes place in an inert diluent, typically a hydrocarbon diluent which is selected from a group comprising C3 to C8 hydrocarbons, such as methane, ethane, propane, n-butane, isobutane, hexanes such as n-hexane, heptanes, octanes etc. or their mixtures. Preferably the diluent is a low boiling hydrocarbon having from 1 to 4 carbon atoms or a mixture of such hydrocarbons. An especially preferred diluent is propane, possibly containing minor amounts of methane, ethane and/or butane. The inert diluent can be the same or different in the different polymerisation steps.

Polymerisation process for producing polyethylene component (A-1)

For the process for producing the polyethylene component (A-1) the ethylene content in the fluid phase of the slurry in the slurry phase reactor may be from 0.5 to 50 % by mole, preferably from 1 to 20 % by mole, and in particular from 2 to 10 % by mole. The benefit of having a high ethylene concentration is that the productivity of the catalyst is increased but the drawback is that more ethylene then needs to be recycled than if the concentration was lower. When aiming at a high molecular weight of the polyethylene component (A-1) it is often advantageous to select a high concentration of ethylene because high ethylene concentration normally favours the propagation reaction over the chain transfer reactions.

In addition to ethylene monomer it is possible to use one or more alpha-olefin comonomers in the slurry phase polymerisation for producing polyethylene component (A-1) if desired. Suitable comonomers are, for example, 1-butene, 1-hexene, 4-methyl-1-pentene, 1-octene and their mixtures.

It is however possible that in this polymerisation step an ethylene homopolymer component (A-1) is produced.

The molecular weight of the polyethylene component (A-1) may be controlled by hydrogen as it is known in the art. However, as the molecular weight of the polyethylene component (A-1) is high the hydrogen content then must be low. Usually it is preferred to conduct the polymerisation in the absence of hydrogen. Further, antistatic additives may be used to prevent the particles from adhering to each other or the walls of the reactor, as disclosed in WO-A-96/19503 and WO-A-96/32420.

The temperature in the slurry phase polymerisation is typically from 30 to 100 °C, preferably from 35 to 90 °C and in particular from 40 to 85 °C. The pressure is typically from 1 to 150 bar, preferably from 1 to 100 bar.

The slurry phase polymerisation may be conducted in any known reactor used for slurry phase polymerisation. Such reactors include a continuous stirred tank reactor and a loop reactor. It is especially preferred to conduct the polymerisation in a loop reactor. In such reactors the slurry is circulated with a high velocity along a closed pipe by using a circulation pump. Loop reactors are generally known in the art and examples are given, for instance, in US-A-4,582,816, US-A-3,405, 109, US-A-3,324,093, EP-A-479 186 and US-A-5,391,654.

The slurry may be withdrawn from the slurry phase reactor either continuously or intermittently. A preferred way of intermittent withdrawal is the use of settling legs where the slurry is allowed to concentrate before withdrawing a batch of the concentrated slurry from the reactor. The use of settling legs is disclosed, amongst others, in US-A-3,374,211, US-A-3,242,150 and EP-A-1 310 295. Continuous withdrawal is disclosed, amongst others, in EP-A-891 990, EP-A-1 415 999, EP-A-1 591 460 and WO-A-2007/025640. The continuous withdrawal is advantageously combined with a suitable concentration method as disclosed in EP-A-1 415 999 and EP-A-1 591 460.

Settling legs are used to concentrate the slurry that is withdrawn from the reactor. The withdrawn stream thus contains more polymer per volume than the slurry within the reactor in average. This has the benefit that less liquid needs to be recycled back to the reactor and thereby the costs of the equipment are lower. In commercial scale plants the fluid which is withdrawn with the polymer evaporates in a flash tank and from there it is compressed with a compressor and recycled into the slurry phase reactor.

However, the settling legs withdraw the polymer intermittently. This causes the pressure and also other variables in the reactor to fluctuate with the period of the withdrawal. Also the withdrawal capacity is limited and depends on the size and number of settling legs. To overcome these disadvantages continuous withdrawal is often preferred.

The continuous withdrawal, on the other hand, has the problem that it typically withdraws the polymer in the same concentration as it is present within the reactor. To reduce the amount of hydrocarbons to be compressed the continuous outlet is advantageously combined with a suitable concentration device, such as a hydrocyclone or sieve, as disclosed in EP-A-1 415 999 and EP-A-1 591 460. The polymer-rich stream is then directed to a flash and the polymer-lean steam is returned directly into the reactor.

Polymerisation process for producing polyethylene component (A-2)

For the process for producing the polyethylene component (A-2) the ethylene content in the fluid phase of the slurry in the slurry phase reactor may be from 0.5 to 50 % by mole, preferably from 1 to 20 % by mole, and in particular from 2 to 10 % by mole. The benefit of having a high ethylene concentration is that the productivity of the catalyst is increased but the drawback is that more ethylene then needs to be recycled than if the concentration was lower.

In addition to ethylene monomer it is possible to use one or more alpha-olefin comonomers in the slurry phase polymerisation for producing polyethylene component (A-2) if desired. Suitable comonomers are, for example, 1-butene, 1-hexene, 4-methyl-1-pentene, 1-octene and their mixtures.

It is however preferred that in this polymerisation step an ethylene homopolymer component (A-2) is produced.

The molecular weight of the polyethylene component (A-2) may be controlled by hydrogen as it is known in the art. Further, antistatic additives may be used to prevent the particles from adhering to each other or the walls of the reactor, as disclosed in WO-A-96/19503 and WO-A-96/32420.

The temperature in the slurry phase polymerisation is typically from 50 to 115 °C, preferably from 60 to 110 °C and in particular from 70 to 100 °C. The pressure is typically from 1 to 150 bar, preferably from 1 to 100 bar.

The slurry phase polymerisation may be conducted in any known reactor used for slurry phase polymerisation. Such reactors include a continuous stirred tank reactor and a loop reactor. It is especially preferred to conduct the polymerisation in a loop reactor. In such reactors the slurry is circulated with a high velocity along a closed pipe by using a circulation pump. Loop reactors are generally known in the art and examples are given, for instance, in US-A-4,582,816, US-A-3,405, 109, US-A-3,324,093, EP-A-479 186 and US-A-5,391,654.

It is sometimes advantageous to conduct the slurry phase polymerisation above the critical temperature and pressure of the fluid mixture. Such operations are described in US-A-5,391,654. In such an operation the temperature is typically at least 85 °C, preferably at least 90 °C. Furthermore the temperature is typically not higher than 110 °C, preferably not higher than 105 °C. The pressure under these conditions is typically at least 40 bar, preferably at least 50 bar. Furthermore, the pressure is typically not higher than 150 bar, preferably not higher than 100 bar. In a preferred embodiment the slurry phase polymerisation step, is carried out under supercritical conditions whereby the reaction temperature and reaction pressure are above equivalent critical points of the mixture formed by hydrocarbon medium, monomer, hydrogen and optional comonomer and the polymerisation temperature is lower than the melting temperature of the polymer formed.

The slurry may be withdrawn from the slurry phase reactor either continuously or intermittently. A preferred way of intermittent withdrawal is the use of settling legs where the slurry is allowed to concentrate before withdrawing a batch of the concentrated slurry from the reactor. The use of settling legs is disclosed, amongst others, in US-A-3,374,211, US-A-3,242,150 and EP-A-1 310 295. Continuous withdrawal is disclosed, amongst others, in EP-A-891 990, EP-A-1 415 999, EP-A-1 591 460 and WO-A-2007/025640. The continuous withdrawal is advantageously combined with a suitable concentration method as disclosed in EP-A-1 415 999 and EP-A-1 591 460.

Settling legs are used to concentrate the slurry that is withdrawn from the reactor. The withdrawn stream thus contains more polymer per volume than the slurry within the reactor in average. This has the benefit that less liquid needs to be recycled back to the reactor and thereby the costs of the equipment are lower. In commercial scale plants the fluid which is withdrawn with the polymer evaporates in a flash tank and from there it is compressed with a compressor and recycled into the slurry phase reactor.

However, the settling legs withdraw the polymer intermittently. This causes the pressure and also other variables in the reactor to fluctuate with the period of the withdrawal. Also the withdrawal capacity is limited and depends on the size and number of settling legs. To overcome these disadvantages continuous withdrawal is often preferred.

The continuous withdrawal, on the other hand, has the problem that it typically withdraws the polymer in the same concentration as it is present within the reactor. To reduce the amount of hydrocarbons to be compressed the continuous outlet is advantageously combined with a suitable concentration device, such as a hydrocyclone or sieve, as disclosed in EP-A-1 415 999 and EP-A-1 591 460. The polymer-rich stream is then directed to a flash and the polymer-lean steam is returned directly into the reactor.

The polymerisation is conducted in the presence of an olefin polymerisation catalyst. The catalyst may be any catalyst which is capable of producing the desired ethylene polymer. Suitable catalysts are, among others, Ziegler - Natta catalysts based on a transition metal, such as titanium, zirconium and/or vanadium or metallocene catalysts or late transition metal catalysts. Especially Ziegler - Natta catalysts and metallocene catalysts are useful as they can produce polymers within a wide range of molecular weight with a high productivity.

Suitable Ziegler-Natta catalysts preferably contain a magnesium compound, an aluminium compound and a titanium compound supported on a particulate support.

The particulate support can be an inorganic oxide support, such as silica, alumina, titania, silica-alumina and silica-titania. Preferably, the support is silica.

Another especially suitable catalyst is a silica supported catalyst having a molar composition of the catalyst including Al: 1.30 to 1.65 mol/kg silica, Mg: 1.25 to 1.61 mol/kg silica, and Ti: 0.70 to 0.90 mol/kg silica.

The average particle size of the silica support can be typically from 10 to 100 mm. However, it has turned out that special advantages can be obtained if the support has an average particle size from 15 to 30 μm, preferably from 18 to 25 μm. Alternatively, the support may have an average particle size of from 30 a 80 μm, preferably from 30 to 50 μm. Examples of suitable support materials are, for instance, ES747JR produced and marketed by Ineos Silicas (former Crossfield), and SP9-491, produced and marketed by Grace.

The magnesium compound is a reaction product of a magnesium dialkyl and an alcohol. The alcohol is a linear or branched aliphatic monoalcohol. Preferably, the alcohol has from 6 to 16 carbon atoms. Branched alcohols are especially preferred, and 2-ethyl-1-hexanol is one example of the preferred alcohols. The magnesium dialkyl may be any compound of magnesium bonding to two alkyl groups, which may be the same or different. Butyl-octyl magnesium is one example of the preferred magnesium dialkyls.

The aluminium compound is chlorine containing aluminium alkyl. Especially preferred compounds are aluminium alkyl dichlorides and aluminium alkyl sesquichlorides.

The titanium compound is a halogen containing titanium compound, preferably chlorine containing titanium compound. Especially preferred titanium compound is titanium tetrachloride.

The catalyst can be prepared by sequentially contacting the carrier with the above mentioned compounds, as described in EP-A-688794 or WO-A-99/51646. Alternatively, it can be prepared by first preparing a solution from the components and then contacting the solution with a carrier, as described in WO-A-01/55230.

Another, especially preferred, group of suitable Ziegler-Natta catalysts contain a titanium compound together with a magnesium halide compound without an inert support. Thus, the catalyst contains a titanium compound on a magnesium dihalide, like magnesium dichloride. Such catalysts are disclosed, for instance, in WO-A-2005/118655 and EP-A-810235.

The Ziegler-Natta catalyst is used together with an activator. Suitable activators are metal alkyl compounds and especially aluminium alkyl compounds. These compounds include alkyl aluminium halides, such as ethylaluminium dichloride, diethylaluminium chloride, ethylaluminium sesquichloride, dimethylaluminium chloride and the like. They also include trialkylaluminium compounds, such as trimethylaluminium, triethyl-aluminium, tri-isobutylaluminium, trihexylaluminium and tri-n-octyl-aluminium. Furthermore they include alkylaluminium oxy-compounds, such as methylaluminiumoxane, hexaisobutylaluminiumoxane and tetraisobutyl-aluminiumoxane. Also other aluminium alkyl compounds, such as iso-prenylaluminium, may be used. Especially preferred activators are trialkylaluminiums, of which triethylaluminium, trimethylaluminium and tri-isobutylaluminium are particularly used.

The amount in which the activator is used depends on the specific catalyst and activator. Typically triethylaluminium is used in such amount that the molar ratio of aluminium to the transition metal, like Al/Ti, is from 1 to 1000, preferably from 3 to 100 and in particular from about 5 to about 30 mol/mol.

The catalyst system can be fed to any polymerisation stage but preferably is fed to the first polymerisation stage. Most preferably the catalyst system is only fed to the first polymerisation stage. The catalyst may be transferred into the polymerisation zone by any means known in the art. It is thus possible to suspend the catalyst in a diluent and maintain it as homogeneous slurry. Especially preferred is to use oil having a viscosity from 20 to 1500 mPa*s as diluent, as disclosed in WO-A-2006/063771. It is also possible to mix the catalyst with a viscous mixture of grease and oil and feed the resultant paste into the polymerisation zone. Still further, it is possible to let the catalyst settle and introduce portions of thus obtained catalyst mud into the polymerisation zone in a manner as disclosed, for instance, in EP-A- 428 054.

The reaction conditions in the multistage polymerisation process are adapted as such that the weight ratio of said polyethylene component (A-1) to said polyethylene component (A-2) in said first polyethylene resin is preferably from 1:99 to 99:1, more preferably from 5:95 to 90:10, most preferably from 10:90 to 80:20.

The process may further comprise a pre-polymerisation step which precedes the polymerisation steps. The purpose of the pre-polymerisation is to polymerise a small amount of polymer onto the catalyst at a low temperature and/or a low monomer concentration. By pre-polymerisation it is possible to improve the performance of the catalyst in slurry and/or modify the properties of the final polymer. The pre-polymerisation step may be conducted in slurry or gas phase. Preferably the pre-polymerisation is conducted in slurry.

Thus, the pre-polymerisation step may be conducted in a loop reactor. The pre-polymerisation is then preferably conducted in an inert diluent, typically a hydrocarbon diluent such as methane, ethane, propane, n-butane, isobutene, pentanes, hexanes, heptanes, octanes etc., or their mixtures. Preferably the diluent is a low boiling hydrocarbon having from 1 to 4 carbon atoms or a mixture of such hydrocarbons. The most preferred diluent is propane.

The temperature in the pre-polymerisation step is typically from 0 °C to 90 °C., preferably from 20 °C to 80 °C and more preferably from 40 °C to 70 °C.

The pressure is not critical and is typically from 1 bar to 150 bar, preferably from 10 bar to 100 bar.

The amount of monomer is typically such that from 0.1 grams to 1000 grams of monomer per one gram solid catalyst component is polymerised in the pre-polymerisation step. As the person skilled in the art knows, the catalyst particles recovered from a continuous pre-polymerisation reactor do not all contain the same amount of pre-polymer.

Instead, each particle has its own characteristic amount which depends on the residence time of that particle in the prepolymerisation reactor. As some particles remain in the reactor for a relatively long time and some for a relatively short time, then also the amount of pre-polymer on different particles is different and some individual particles may contain an amount of pre-polymer which is outside the above limits. However, the average amount of pre-polymer on the catalyst typically is within the limits specified above.

In addition to ethylene monomer it is possible to use one or more alpha-olefin comonomers in the pre-polymerisation step if desired. Suitable comonomers are, for example, 1-butene, 1-hexene, 4-methyl-1-pentene, 1-octene and their mixtures.

It is however preferred that in the pre-polymerisation step an ethylene homopolymer prepolymer component is produced.

The molecular weight of the pre-polymer may be controlled by hydrogen as it is known in the art. Further, antistatic additives may be used to prevent the particles from adhering to each other or the walls of the reactor, as disclosed in WO-A-96/19503 and WO-A-96/32420.

The catalyst components are preferably all introduced to the pre-polymerisation step. However, where the solid catalyst component and the cocatalyst can be fed separately it is possible that only a part of cocatalyst is introduced into the pre-polymerisation stage and the remaining part into the subsequent polymerisation stages. Also in such cases it is necessary to introduce as much cocatalyst into the pre-polymerisation stage as necessary to obtain a sufficient polymerisation reaction.

The polyethylene resin (A) preferably is produced in a multi-stage process which further comprises a compounding step, wherein the base resin, which is typically obtained as a base resin powder from the reactor, is extruded in an extruder and then pelletized to polymer pellets in a manner known in the art to form the polyolefin composition of the invention.

In one embodiment of the process of the invention polyethylene resin (A) is formed by in situ blending of polyethylene components (A-1) and (A-2), preferably in two subsequent steps of a multistage polymerization process. In such a multistage process polyethylene resin (A) is formed by polymerizing, respectively copolymerizing, ethylene in a reactor cascade formed by at least a first reactor and a second reactor, whereby preferably the first reactor is a loop reactor and further preferably, the second reactor is a gas phase reactor. Thereby, polyethylene components (A-1) and (A-2) are polymerized in subsequent reactor stages wherein the component polymerized in the second reactor is polymerized in the presence of the component polymerized in the first reactor.

However, in one embodiment of the process of the invention polyethylene resin (A) is formed by melt blending of polyethylene components (A-1) and (A-2). Furthermore, a melt blending step may be present also when the polyethylene components (A-1) and (A-2) have been produced by in-situ blending. If the polyethylene resin (A) is produced in the form of pellets then the melt blending step for producing the pellets of polyethylene resin (A) is called the first melt blending step. It is, however, possible that the polyethylene resin (A) is produced in an in-situ process and used in the subsequent process steps as powder. Then the first melt blending step is preferably absent.

In the eventual first melt blending step the polyethylene components (A-1) and (A-2) can be fed to the first melt blending device as pellets or as powder. Preferably, both components (A-1) and (A-2) are introduced as powder.

The eventual first melt blending device usually has one or more feeding ports. For effective utilization of the screw length it is preferred to feed both polyethylene components (A-1) and (A-2) through one feed port.

The feed port of the extruder used in the first melt blending step is preferably designed so that the L/D is from 12 to 20, more preferably from 14 to 18, wherein L is the distance from the feed port to the die and D is the diameter. Typically, co-rotating twin screw extruders have a greater L/D ratio than the counter-rotating twin screw extruders.

It is possible that the extruder used in the first melt blending step has an additional feed port downstream of the above-mentioned feed port. It is then preferred that the distance between such an additional feed port and the die would be such that the ratio of said distance to the screw diameter would not be less than 10.

It is, however, preferred to feed all the polymer components to the extruder via one feed port.

Additives as defined above can be introduced to the polyethylene resin (A) by feeding them into the first melt blending step through any one of the one or more feed ports.

Suitable melt blending devices are mixers or extruders. Especially suitable are twin screw extruders such as e.g. Leistritz ZSE MAXX, and Coperion ZSK twin screw extruders.

The set point for the barrel temperature in the extruder is preferably from 150°C to 220°C, more preferably from 160°C to 210°C and most preferably from 170°C to 200°C. For small extruders and also for large extruders during the start-up the barrels are typically heated, for instance, by electric bands. However, as it is well understood by the person skilled in the art large extruders generally operate adiabatically and then the barrel temperatures are not controlled.

The throughput is selected based on the desired production volume. As the person skilled in the art understands greater throughput can be achieved by extruders having a greater diameter. Useful scale-up principles for mixing is presented, among others, in Rauwendaal, Polymer Extrusion, Hanser Publishers, Munich, 1986 (ISBN 3-446-14196-0), in Table 8-4 on page 439. It shows that the ratio of the output rates is directly proportional to the cube of the ratio of the diameters.

$$\dot{V}_2 = \dot{V}_1 \cdot \left(\frac{D_2}{D_1}\right)^3$$

where $V_2$ and $D_2$ are the output rate and diameter of the large extruder and $V_1$ and $D_1$ are output rate and the diameter of the small extruder.

For small laboratory and pilot scale extruders throughput within a range of from about 1 up to about 200 kg/h would be appropriate and for large production scale extruders the throughput could be from about 300 up to about 40,000 kg/h.

Optionally, additives or other polymer components can be added to the composition during the compounding step in an amount as described above. Preferably, the polyethylene resin (A) obtained from the reactor is compounded in the extruder together with additives in a manner known in the art.

In one embodiment of the process according to the invention the first polyethylene resin (A) is pelletized prior to blending with the second polyethylene resin (B) to form the polyethylene composition.

In another embodiment of the process according to the invention the first polyethylene resin (A) is blended in powder form with the second polyethylene resin (B) to form the polyethylene composition.

In both ways the resultant multimodal polyethylene composition shows improved sagging resistance.

Blending of the first polyethylene resin (A) and the second polyethylene resin (B)

In the process according to the invention the first polyethylene resin (A) is blended in a melt blending step with the second polyethylene resin (B) to form the polyethylene composition. The melt blending step for blending the polyethylene resin (A) with the polyethylene resin (B) is called the second melt blending step regardless whether the eventual first melt blending step is present or not.

The weight ratio of the first polyethylene resin (A) to the second polyethylene resin (B) in the polyethylene composition is preferably from 1:99 to 25:75, more preferably from 3:97 to 23:77, most preferably from 4:96 to 20:80, such as 4:96 to 15:85.

As discussed above, the polyethylene composition is formed by melt blending of the first polyethylene resin (A) and the second polyethylene resin (B) in the second melt blending step in a second melt blending device.

Thereby, polyethylene resins (A) and (B) can be fed to the melt blending device as pellets or as powder. If the polyethylene resin (A) has been produced in-situ in a multistage polymerisation process then preferably the resins (A) and (B) are introduced as powders into the second melt blending device.

It is, thus, more preferred to dry-blend the polyethylene resins (A) and (B) and introduce said dry-blend via one feeding zone into the second melt-blending device.

During dry-blending of the polyethylene resins (A) and (B) additives as known in the art can be added.

In the process according to the invention the first polyethylene resin (A) is blended in the second melt blending step with the second polyethylene resin (B) to form the polyethylene composition.

The feed port of the extruder used in the second melt blending step is preferably designed so that the L/D is from 18 to 30, more preferably from 20 to 26, wherein L is the distance from the feed port to the die and D is the diameter. It is possible that the extruder used in the second melt blending step has an additional feed port downstream of the above-mentioned feed port. It is then preferred that the distance between such additional feed port and the die would be such that the ratio of said distance to the screw diameter would not be less than 10. It is, however, preferred to feed all the polymer components to the extruder via one feed port. Typically, co-rotating twin screw extruders have a greater L/D ratio than the counter-rotating twin screw extruders.

Additives as defined above can be introduced to the polyethylene composition by feeding them into the second melt blending step through any one of the one or more feed ports. It is, thus, most preferred to dry-blend the polyethylene resins (A) and (B) and introduce said dry-blend via one feed port into the melt-blending device.

During dry-blending of the polyethylene resins (A) and (B) additives as defined above can be added.

Suitable melt blending devices are mixers or extruders. Especially suitable are twin screw extruders such as ZSK extruders by Coperion, CIMP extruders by Japan Steel Works and Kobe twin screw extruders. For each type of extruder the diameter can be chosen based on the desired production rate using the principles discussed above. The diameter is usually indicated in the extruder name, such as ZSK40 (40 mm extruder), ZSK80 (80 mm extruder) CIMP-90 (90 mm extruder).

Preferably the second melt blending device has a diameter which is equal to or greater than the diameter of the eventual first melt blending device. Especially preferably the second melt blending device has a greater diameter than the eventual first melt blending device.

The set point for the barrel temperature in the extruder is preferably from 150°C to 250°C, more preferably from 170°C to 230°C and most preferably from 200°C to 220°C. For small extruders and also for large extruders during the start-up the barrels are typically heated, for instance, by electric bands. However, as it is well understood by the person skilled in the art large extruders generally operate adiabatically and then the barrel temperatures are not controlled.

As mentioned above for the first melt blending device for small extruders a throughput within a range of from about 1 up to about 200 kg/h would be appropriate and for large extruders the throughput could be from about 300 up to about 40,000 kg/h or even more.

The screw speed in the extruder is typically depends on the throughput and is preferably from 100 $min^{-1}$ to 200 $min^{-1}$, more preferably 120 $min^{-1}$ to 180 $min^{-1}$.

Again, the throughput is set by the desired production volume. For scale-up purposes the discussion given for the first melt blending device is valid also for the second melt blending device. Preferably the polyethylene composition exiting the second melt blending device is pelletized before storage.

The different components of the polyethylene composition according to the invention and obtainable according to the process according to the invention as characterized as follows:

Polyethylene resin (A)

The polyethylene resin (A) comprises polyethylene components (A-1) and (A-2) which are blended according to the process of the invention.

Preferably, the base resin of the polyethylene resin (A) consists of the polyethylene components (A-1) and (A-2).

The weight ratio of polyethylene component (A-1) to polyethylene component (A-2) in the polyethylene resin (A) is preferably from 1:99 to 99:1, more preferably from 5:95 to 90:10, most preferably from 10:90 to 80:20.

Polyethylene resin (A) can comprise additives as defined above.

Polyethylene resin (A) is characterized by the following properties:

Mw

Polyethylene resin (A) has a weight average molecular weight Mw of 150 kg/mol to 1,500 kg/mol, preferably from 170 kg/mol to 1,200 kg/mol, most preferably from 200 kg/mol to 1,000 kg/mol, determined by GPC.

Compared to the Mw of polyethylene component (A-1) polyethylene resin (A) has a lower Mw.

$MFR_5$

Polyethylene resin (A) can have a rather broad range of $MFR_5$. Preferably polyethylene resin (A) has a melt flow rate $MFR_5$ (190°C, 5 kg) at most 60 g/10min, more preferably at most 55 g/10min, and most preferably at most 50 g/10min determined according to ISO 1133.

Density

Polyethylene resin (A) has a density of equal to or more than 910.0 $kg/m^3$ and equal to or less than 975.0 $kg/m^3$, more preferably of equal to or more than 912.0 $kg/m^3$ and equal to or less than 974.0 $kg/m^3$, and most preferably of equal to or more than 915.0 $kg/m^3$ and equal to or less than 974.0 $kg/m^3$ determined according to ISO 1183-1:2004.

Polyethylene component (A-1)

Polyethylene component (A-1) can be an ethylene homo- or copolymer and is characterized by the following properties:

Mw

Polyethylene component (A-1) preferably has a weight average molecular weight Mw of 200 kg/mol to 10,000 kg/mol, more preferably from 400 kg/mol to 5,000 kg/mol, and most preferably from 700 kg/mol to 2,500 kg/mol, determined by GPC

Mv

Polyethylene component (A-1) has a viscosity average molecular weight Mv of 500 kg/mol to 15,000 kg/mol, preferably from 700 kg/mol to 12,000 kg/mol, most preferably from 1,000 kg/mol to 8,000 kg/mol, determined according to ASTM 4020-81.

Density

Polyethylene component (A-1) preferably has a density of equal to or more than 915.0 kg/m$^3$ and equal to or less than 960.0 kg/m$^3$, more preferably of equal to or more than 920.0 kg/m$^3$ and equal to or less than 955.0 kg/m$^3$, and most preferably of equal to or more than 930.0 kg/m$^3$ and equal to or less than 950.0 kg/m$^3$ determined according to ISO 1183-1:2004.

Polyethylene component (A-2)

Polyethylene component (A-2) can be a unimodal or multimodal ethylene homo- or copolymer. Further, it can be the same as the polyethylene resin (B) or it can be different therefrom.
If the polyethylene components (A-1) and (A-2) are produced separately from each other and are fed as separate polymers into the extruder, then it is sometimes advantageous that the polyethylene component (A-2) is the same as the polyethylene resin (B) or at least similar to the polyethylene resin (B). By "similar to" it is meant that even though the properties of (A-2) and (B) may be to some extent different, they do not differ from each other more than two different production lots of one product normally do.
If the polyethylene components (A-1) and (A-2) are produced by in-situ polymerisation, then the polyethylene component (A-2) is preferably unimodal. It can be a homopolymer of ethylene or a copolymer of ethylene with at least one alpha-olefin comonomer unit. The alpha-olefin comonomer unit preferably is selected from alpha-olefin co-monomer units with 3 to 12 carbon atoms, more preferably 4 to 8 carbon atoms. Suitable alpha-olefin comonomer units are 1-butene, 1-hexene and 1-octene. Thereby, 1-butene and 1-hexene are most preferred. However, it is preferred that polyethylene component (A-2) is an ethylene homopolymer.
The polyethylene component (A-2) has a lower molecular weight as polyethylene component (A-1). Especially, the viscosity average molecular weight of the polyethylene component (A-1) is preferably greater than the weight average molecular weight of the polyethylene component (A-2). It is preferred that the difference between the weight average molecular weight of (A-1) and that of (A-2) is at least 100 kg/mol. Alternatively or additionally it is preferred that the difference between the viscosity average molecular weight of (A-1) and the weight average molecular weight of (A-2) is at least 100 kg/mol.

Polyethylene resin (B)

Polyethylene resin (B) can be a unimodal or multimodal ethylene homo- or copolymer. It is preferred that the polyethylene resin (B) is multimodal.
Preferably, the polyethylene resin (B) is a copolymer of ethylene with at least one alpha-olefin comonomer unit. The alpha-olefin comonomer unit preferably is selected from alpha-olefin co-monomer units with 3 to 12 carbon atoms, more preferably 4 to 8 carbon atoms. Suitable alpha-olefin comonomer units are 1-butene, 1-hexene and 1-octene. Thereby, 1-butene and 1-hexene are most preferred.
Polyethylene resin (B) can comprise additives as defined above.

Mw

Polyethylene resin (B) has a weight average molecular weight Mw of 50 kg/mol to less than 700 kg/mol, preferably from 70 kg/mol to 500 kg/mol, most preferably from 100 kg/mol to 300 kg/mol, determined by GPC.

MFR$_5$

Polyethylene resin (B) preferably has a melt flow rate MFR$_5$ (190°C, 5 kg) of 0.01 to 5.0 g/10min, more preferably of 0.05 to 4.0 g/10min, and most preferably 0.1 to 3.0 g/10min determined according to ISO 1133.

Density

Polyethylene resin (B) has a density of equal to or more than 910.0 kg/m$^3$ and equal to or less than 960.0 kg/m$^3$, more preferably of equal to or more than 915.0 kg/m$^3$ and equal to or less than 955.0 kg/m$^3$, and most preferably of equal to or more than 920.0 kg/m$^3$ and equal to or less than 950.0 kg/m$^3$ determined according to ISO 1183-1:2004.

Polymerisation

Polyethylene resin (B) is usually made by a multi-stage process, i.e. a process which makes use of at least two reactors, one for producing a lower molecular weight component and a second for producing a higher molecular weight component. These reactors may be employed in parallel, in which case the components must be mixed after production. More commonly, the reactors are employed in series, such that the products of one reactor are used as the starting material in the next reactor, e.g. one component is formed in the first reactor and the second is formed in the second reactor in the presence of the first component. In this way, the two components are more intimately mixed, since one is formed in the presence of the other.

The polymerisation reactions used in each stage may involve conventional ethylene homopolymerisation or copolymerisation reactions, e.g. gas phase, slurry phase, liquid phase polymerisations, using conventional reactors, e.g. loop reactors, gas phase reactors, batch reactors, etc.

The polymerisation may be carried out continuously or batchwise, preferably the polymerisation is carried out continuously.

Known two-stage processes are for instance liquid phase-liquid phase processes, gas phase-gas phase processes and liquid phase-gas phase processes. It is also known that these two-stage processes can further be combined with one or more additional polymerisation steps selected from gas phase, slurry phase or liquid phase polymerisation processes.

Polyethylene resin (B) is preferably produced in a multistage process, where lower molecular weight and higher molecular weight polymers (components) are produced in different polymerisation steps, in any order.

The polymerisation is conducted in the presence of an olefin polymerisation catalyst. The catalyst may be any catalyst which is capable of producing the desired ethylene polymer. Suitable catalysts are, among others, Ziegler - Natta catalysts based on a transition metal, such as titanium, zirconium and/or vanadium or metallocene catalysts or late transition metal catalysts. Especially Ziegler - Natta catalysts and metallocene catalysts are useful as they can produce polymers within a wide range of molecular weight with a high productivity.

Suitable Ziegler - Natta catalysts preferably contain a magnesium compound, an aluminium compound and a titanium compound supported on a particulate support.

Polyethylene composition

The multimodal polyethylene composition according to the invention comprises polyethylene resins (A) and (B) which are blended according to the process of the invention.

Preferably, the base resin of the composition consists of the polyethylene resins (A) and (B).

The composition can comprise additives as defined above.

The weight ratio of the first polyethylene resin (A) to with the second polyethylene resin (B) in the polyethylene composition is preferably from 1:99 to 25:75, more preferably from 3:97 to 23:77, most preferably from 4:96 to 20:80, such as 4:96 to 15:85.

Preferably the amount of polyethylene component (A-1) in the polyethylene composition is 0.5 to 15 wt%, more preferably 1.0 to 10 wt%, more preferably 1.5 to 8 wt%, still more preferably 1.8 to 5 wt% of the total polyethylene composition.

The polyethylene composition is characterized by the following properties:

Mw

The multimodal polyethylene composition preferably has a weight average molecular weight Mw of 100 kg/mol to 500 kg/mol, preferably from 150 kg/mol to 400 kg/mol, most preferably from 200 kg/mol to 350 kg/mol, determined by GPC.

$MFR_5$

The composition according to the present invention has a melt flow rate $MFR_5$ (190°C, 5 kg) of at most 1.0 g/10min, preferably of at most 0.5 g/10min, and more preferably of 0.01 to 0.5 g/10 min and especially preferably of 0.05 to 0.5 g/10min determined according to ISO 1133.

$MFR_{21}$

The composition according to the present invention preferably has a melt flow rate $MFR_{21}$ (190°C, 21.6 kg) of 0.5 to 100 g/10 min, preferably of 0.7 to 50 g/10min, and most preferably of 1.0 to 20 g/10min determined according to ISO 1133.

Density

The composition according to the present invention preferably has a density of equal to or more than 910.0 kg/m$^3$ and equal to or less than 966.0 kg/m$^3$, more preferably of equal to or more than 912.0 kg/m$^3$ and equal to or less than 965.0 kg/m$^3$, and most preferably of equal to or more than 915.0 kg/m$^3$ and equal to or less than 966.0 kg/m$^3$ determined according to ISO 1183-1:2004.

The density of the composition is influenced by the density of the base resin and can further be adjusted by the amount of filler, usually carbon black, in the composition.

The density of the base resin is mainly influenced by the amount and type of comonomer. In addition to that, the nature of the polymer originating mainly from the catalyst used as well as the melt flow rate play a role. In addition to that, it should be stressed that the comonomer does not need to be a single comonomer. Mixtures of comonomers are also possible.

The composition is further characterized by specific rheological properties.

viscosity at a shear stress of 747 Pa, eta747 Pa

The composition according to the present invention preferably has a viscosity at a shear stress of 747 Pa, eta747 Pa, of 500 kPa·s or more, more preferably of 550 kPa·s or more and most preferably of 500 kPa·s or more. The upper limit is usually not greater than 2000 kPa·s.

Viscosities determined at low shear rates such as eta747 Pa are a measure for the molecular weight of a polyethylene composition as they are directly proportional with the weight average molecular weight Mw. Additionally the viscosity eta747 is influenced by the high molecular weight tail of the molecular weight distribution, such as the component of polymer molecules having the weight average molecular weight of 1000 kg/mol or more. A high value of eta747 Pa thus shows a high amount of long polyethylene chains in the composition. Thus, for two polymer resins having the same MFR but different values of eta747 Pa the resin having a greater value of eta747 Pa has a greater amount of UHMWPE in the composition or contains UHMWPE having a greater molecular weight.

Applications

The polyethylene compositions produced according to the present invention are suitable for different applications such as steel pipe coating, high density (HD) pipe applications, film applications, such as linear low density (LLD) films, medium density (MD) films and high density (HD) films, injection moulding applications and cable jacketing. For these different applications the polyethylene composition has the following properties:

Steel pipe coating

For steel pipe coating the composition according to the present invention preferably has a melt flow rate MFR$_5$ (190°C, 5 kg) of 0.05 to 5.0 g/10min, more preferably of 0.1 to 2.5 g/10min, and most preferably 0.2 to 1.0 g/10min determined according to ISO 1133.

The composition preferably has a density of equal to or more than 935.0 kg/m$^3$ and equal to or less than 965.0 kg/m$^3$, more preferably of equal to or more than 936.5 kg/m$^3$ and equal to or less than 962.0 kg/m$^3$, and most preferably of equal to or more than 938.0 kg/m$^3$ and equal to or less than 960.0 kg/m$^3$ determined according to ISO 1183-1:2004.

The composition preferably has a weight average molecular weight Mw of 50 kg/mol to 300 kg/mol, more preferably 70 kg/mol to 250 kg/mol, determined by GPC.

LLD films

For LLD films the composition according to the present invention preferably has a melt flow rate MFR$_5$ (190°C, 5 kg) of 0. 5 to 5.0 g/10min, more preferably of 0.6 to 4.0 g/10min, and most preferably 0.8 to 3.0 g/10min determined according to ISO 1133.

The composition preferably has a melt flow rate MFR$_{21}$ (190°C, 21.6 kg) of 10 to 100 g/10 min, preferably of 12 to 80 g/10min, and most preferably of 15 to 70 g/10min determined according to ISO 1133.

The composition preferably has a density of equal to or more than 910.0 kg/m$^3$ and equal to or less than 930.0 kg/m$^3$, more preferably of equal to or more than 912.5 kg/m$^3$ and equal to or less than 927.0 kg/m$^3$, and most preferably of equal to or more than 915.0 kg/m$^3$ and equal to or less than 925.0 kg/m$^3$ determined according to ISO 1183-1:2004.

The composition preferably has a weight average molecular weight Mw of 100 kg/mol to 350 kg/mol, more preferably 130 kg/mol to 300 kg/mol, determined by GPC.

MD film

For MD films the composition according to the present invention preferably a melt flow rate $MFR_{21}$ (190°C, 21.6 kg) of 2.5 to 50 g/10 min, preferably of 3.5 to 40 g/10min, and most preferably of 5 to 30 g/10min determined according to ISO 1133.

The composition preferably has a density of equal to or more than 925.0 kg/m$^3$ and equal to or less than 945.0 kg/m$^3$, more preferably of equal to or more than 927.5 kg/m$^3$ and equal to or less than 943.0 kg/m$^3$, and most preferably of equal to or more than 930.0 kg/m$^3$ and equal to or less than 940.0 kg/m$^3$ determined according to ISO 1183-1:2004.

HD films

For HD films the composition according to the present invention preferably a melt flow rate $MFR_{21}$ (190°C, 21.6 kg) of 2.5 to 20 g/10 min, preferably of 3 to 15 g/10min, and most preferably of 4 to 10 g/10min determined according to ISO 1133.

The composition preferably has a density of equal to or more than 935.0 kg/m$^3$ and equal to or less than 970.0 kg/m$^3$, more preferably of equal to or more than 940.0 kg/m$^3$ and equal to or less than 965.0 kg/m$^3$, and most preferably of equal to or more than 945.0 kg/m$^3$ and equal to or less than 960.0 kg/m$^3$ determined according to ISO 1183-1:2004.

Injection moulding

For injection moulding the composition according to the present invention preferably has a melt flow rate $MFR_2$ (190°C, 2.16 kg) of 0.2 to 4.0 g/10 min, preferably of 0.4 to 3.0 g/10min, and most preferably 0.2 to 1.0 g/10min determined according to ISO 1133.

The composition preferably has a melt flow rate $MFR_{21}$ (190°C, 21.6 kg) of 15 to 300 g/10 min, preferably of 20 to 250 g/10min, and most preferably of 25 to 200 g/10min determined according to ISO 1133.

The composition preferably has a density of equal to or more than 935.0 kg/m$^3$ and equal to or less than 955.0 kg/m$^3$, more preferably of equal to or more than 936.5 kg/m$^3$ and equal to or less than 952.0 kg/m$^3$, and most preferably of equal to or more than 938.0 kg/m$^3$ and equal to or less than 950.0 kg/m$^3$ determined according to ISO 1183-1:2004.

HD pipe

For HD pipes the composition according to the present invention preferably has a melt flow rate MFR5 (190°C, 5 kg) of 0.05 to 1.0 g/10min, more preferably of 0.08 to 0.7 g/10min, and most preferably 0.1 to 0.4 g/10min determined according to ISO 1133.

The composition preferably has a density of equal to or more than 945.0 kg/m$^3$ and equal to or less than 965.0 kg/m$^3$, more preferably of equal to or more than 946.5 kg/m$^3$ and equal to or less than 964.0 kg/m$^3$, and most preferably of equal to or more than 948.0 kg/m$^3$ and equal to or less than 963.0 kg/m$^3$ determined according to ISO 1183-1:2004.

Cable jacketing

For cable jacketing the composition according to the present invention preferably has a melt flow rate MFR5 (190°C, 5 kg) of 0.1 to 3.0 g/10min, more preferably of 0.2 to 2.5 g/10min, and most preferably 0.3 to 3.0 g/10min determined according to ISO 1133.

The composition preferably has a density of equal to or more than 938.0 kg/m$^3$ and equal to or less than 965.0 kg/m$^3$, more preferably of equal to or more than 939.0 kg/m$^3$ and equal to or less than 962.0 kg/m$^3$, and most preferably of equal to or more than 940.0 kg/m$^3$ and equal to or less than 960.0 kg/m$^3$ determined according to ISO 1183-1:2004.

Advantages of the invention

The compositions produced by the process of the present invention have a greater viscosity at a low shear rate for a given melt flow rate of the resin. They are thus more resistant against sagging in various processing stages, such as film blowing, blow moulding and pipe extrusion.

**Description of methods**

Melt flow rate

Melt flow rate (MFR) was determined according to ISO 1133 at 190 °C. The load under which the measurement is conducted is given as a subscript. Thus, the MFR under the load of 2.16 kg is denoted as $MFR_2$. The melt flow rate $MFR_{21}$ is correspondingly determined at 190 °C under a load of 21.6 kg.

Density

Density of the polymer was measured according to ISO 1183-1:2004 Method A on compression moulded specimen prepared according to EN ISO 1872-2 (Feb 2007) and is given in $kg/m^3$.

Molecular weight

Mw, Mn and MWD are measured by Gel Permeation Chromatography (GPC) according to the following method: The weight average molecular weight Mw and the molecular weight distribution (MWD = Mw/Mn wherein Mn is the number average molecular weight and Mw is the weight average molecular weight) is measured according to ISO 16014-4:2003 and ASTM D 6474-99. A Waters GPCV2000 instrument, equipped with refractive index 10 detector and online viscometer was used with 2 x GMHXL-HT and 1x G7000HXL-HT TSK-gel columns from Tosoh Bioscience and 1,2,4-trichlorobenzene (TCB, stabilized with 250 mg/l 2,6-Di tert-butyl-4-methyl-phenol) as solvent at 140 °C and at a constant flow rate of 1 mL/min. 209.5 $\mu$L of sample solution were injected per analysis. The column set was calibrated using universal calibration (according to ISO 16014-2:2003) with at least 15 narrow MWD polystyrene (PS) standards in the range of 1 kg/mol to 12 000 kg/mol. Mark Houwink constants were used as given in ASTM D 6474-99. All samples were prepared by dissolving 0.5 - 4.0 mg of polymer in 4 mL (at 140 °C) of stabilized TCB (same as mobile phase) and keeping for max. 3 hours at a maximum temperature of 160 °C with continuous gentle shaking prior sampling in into the GPC instrument.

As it is known in the art, the weight average molecular weight of a blend can be calculated if the molecular weights of its components are known according to:

$$Mw_b = \sum_i w_i \cdot Mw_i$$

where $Mw_b$ is the weight average molecular weight of the blend,

$w_i$ is the weight component of component "i" in the blend and

$Mw_i$ is the weight average molecular weight of the component "i".

The number average molecular weight can be calculated using the well-known mixing rule:

$$Mn_b = \sum_i \frac{w_i}{Mn_i}$$

where $Mn_b$ is the weight average molecular weight of the blend,

$w_i$ is the weight component of component "i" in the blend and

$Mn_i$ is the weight average molecular weight of the component "i".

Viscosity average molecular weight (Mv)

Nominal viscosity molecular weight (Mv) is calculated from the intrinsic viscosity $[\eta]$ according to ASTM D 4020 - 05

$$Mv = 5.37 \times 10^4 \times [\eta]^{1.37} \ .$$

Shear viscosity eta747

The measurement principle is to apply a certain torque to the plate axis via a precision motor. This torque is then translated into a shear stress in the sample. This shear stress is kept constant. The rotational speed produced by the shear stress is recorded and used for the calculation of the viscosity of the sample. The conditions applied are generally described in ISO 6721-10:1999.

The creep test was performed on an Anton Paar MCR 501 stress controlled rotational rheometer, using a parallel plate geometry of 25 mm and setting a gap of 1.8 mm. Sample preparation was done by compression moulding at 200°C. The melting and pressure loading process used on the compression moulding, were done for a total time of 5 minutes. The creep test was done at 190°C, by the application of a constant shear stress, of 747 Pa. The measurement starting was set for a normal force of less than 3.5 N. The resulting response was monitored in terms of both deformation, $\gamma$ and shear viscosity, $\eta$, over a total creep time of 1860 s. The so-called eta747 is the shear viscosity determined for a creep time of 1740 s.

The appropriate applied creep stress was previously determined by means of an oscillatory shear measurement, in order to ensure a creep response within the linear viscoelastic region.

References:

[1] Rheological characterization of polyethylene fractions" Heino, E.L., Lehtinen, A., Tanner J., Seppälä, J., Neste Oy, Porvoo, Finland, Theor. Appl. Rheol., Proc. Int. 10 Congr. Rheol, 11th (1992), 1, 360-362

[2] Definition of terms relating to the non-ultimate mechanical properties of 15 polymers, Pure & Appl. Chem., Vol. 70, No. 3, pp. 701-754, 1998.

**Examples**

**Catalyst Preparation Example**

Complex preparation:

87 kg of toluene was added into the reactor. Then 45.5 kg Bomag A (Butyloctyl magnesium) in heptane was also added in the reactor. 161 kg 99.8 % 2-ethyl-1-hexanol was then introduced into the reactor at a flow rate of 24-40 kg/h. The molar ratio between BOMAG-A and 2-ethyl-1-hexanol was 1:1.83.

Solid catalyst component preparation:

330 kg silica (calcined silica, Sylopol ® 2100) and pentane (0.12 kg/kg carrier) were charged into a catalyst preparation reactor. Then EADC (Ethylaluminium dichloride) (2.66 mol/kg silica) was added into the reactor at a temperature below 40 °C during two hours and mixing was continued for one hour. The temperature during mixing was 40 -50 °C. Then Mg complex prepared as described above was added (2.56 mol Mg/kg silica) at 50 °C during two hours and mixing was continued at 40 -50 °C for one hour. 0.84 kg pentane/kg silica was added into the reactor and the slurry was stirred for 4 hours at the temperature of 40 -50 °C . Finally, $TiCl_4$ (1.47 mol/kg silica) was added during at least 1 hour at 55 °C to the reactor. The slurry was stirred at 50 - 60 °C for five hours. The catalyst was then dried by purging with nitrogen.

Molar composition of the ready catalyst is: Al/Mg/Ti = 1.5/1.4/0.8 (mol/kg silica). The titanium content of the catalyst was 3.8 % by mole and an average particle size of 9 $\mu$m.

**Reference Example 1**

A loop reactor having a volume of 50 dm$^3$ was operated continuously at a temperature of 60 °C and a pressure of 62 bar. Into the reactor were introduced 42 kg/h of propane diluent, 2 kg/h of ethylene and 35 g/h of hydrogen. In addition 3 g/h of a solid polymerisation catalyst component as described above in Catalyst Preparation Example was introduced into the reactor together with triethylaluminium cocatalyst so that the ratio of aluminium to titanium was 30 mol/mol. The rate of polymer production was about 1.8 kg/h.

The slurry from the 50 dm$^3$ loop reactor was withdrawn and transferred continuously to another loop reactor having a volume of 500 dm3 and which was operated at a temperature of 95 °C and a pressure of 60 bar. Into the reactor were introduced additional propane diluent, ethylene and hydrogen. The ethylene concentration in the fluid mixture was 3.4 mol-%, based on the total number of moles in the fluid mixture, the molar ratio of hydrogen to ethylene 650 mol/kmol. The rate of polymer production was 32 kg/h and the $MFR_2$ of the ethylene homopolymer was 500 g/10 min.

The slurry from the loop reactor was withdrawn by using settling legs into a flash vessel operated at a temperature of 50 °C and a pressure of 3 bar where the hydrogen and major part of the hydrocarbons was removed from the polymer.

The ethylene homopolymer was directed into a fluidized bed gas phase reactor operated at 85 °C temperature and 20 bar pressure. Into the reactor were introduced additional ethylene, 1-butene comonomer, hydrogen and nitrogen as inert gas. The ethylene concentration was 11 mol-%, based on the total number of moles in the gas mixture. Hydrogen and 1-butene were added so that the bimodal polymer had a density of 943 kg/m$^3$, an $MFR_5$ of 0.20 g/10 min and a weight average molecular weight Mw of 300 kg/mol. The split between the polymer produced in the loop reactor and the gas phase reactor was 50/50.

The resulting polymer powder was dried from hydrocarbons and mixed with 3000 ppm of Irganox B225, 1000 ppm of calcium stearate and 2.4 % of carbon black, based on the final composition. A part of the mixture was then extruded into pellets by using a CIM90P twin screw extruder (manufactured by Japan Steel Works).

## Inventive Example 1

Into an agitated reactor having a volume of 20 dm$^3$ were introduced 3400 g propane at the room temperature and 600 mg polymerisation catalyst having a solid titanium component as described above in Catalyst Preparation Example and triethylaluminium as an activator so that the molar ratio Al/Ti=15. The reactor was temperature was set to 50 °C and ethylene was continuously introduced into the reactor to maintain an ethylene pressure of 4.5 bar. The polymerisation was continued until 2250 g monomer consumed after which reactor was depressurised and the hydrocarbons were removed.

The reactor was flushed and then heated up to 82°C and 3400 g propane was introduced into the reactor. Then 105 L hydrogen (normal litres, at 0 °C and atmospheric pressure) was added, the temperature was increased to 85 °C and ethylene feed was started to maintain an ethylene pressure in the reactor of 48.03 bar. The polymerisation was continued until 750 g monomer consumed.

The split of polymer produced during the first step to the polymer produced during the second step was thus 78/22.

The resulting polymer blend had a weight average molecular weight of 1210 kg/mol.

The polymer blend as disclosed above was mixed with the polymer of Reference Example 1 so that the content of the polymer blend was 10.26 parts per weight and the amount of the polymer of Reference Example 1 was 83.62 parts per weight. In addition 0.22 parts per weight of Irganox B225, 0.15 parts per weight of calcium stearate and 5.75 parts per weight of a carbon black masterbatch (the calculated content of the carbon black was 2.25 parts per weight) were added. The resulting polymer composition had $MFR_5$ of 0.10 g/10 min and the viscosity measured at 747 Pa was 2260 kPas. The resin was extruded with a co-rotating twin screw extruder ZSK18 manufactured by Coperion. The temperature in the beginning of the melting zone of the extruder was set to 150 °C and in all the remaining zones to 230 °C. The throughput was 0.8 kg/h and the screw speed was 120 RPM.

## Inventive Example 2

Into an agitated reactor having a volume of 20 dm$^3$ were introduced 3400 g propane at the room temperature and 600 mg polymerisation catalyst having a solid titanium component as described above in Catalyst Preparation and triethylaluminium as an activator so that the molar ratio Al/Ti=15. The reactor temperature was set to 50 °C and ethylene was continuously introduced into the reactor to maintain an ethylene pressure of 4.5 bar. The polymerisation was continued until 1500 g monomer consumed after which reactor was depressurised and the hydrocarbons were removed.

Thereafter reactor temperature was maintained at the room temperature and 3400 g propane was introduced into the reactor. Then 105 L hydrogen was added, the temperature was increased to 85 °C and ethylene feed was started to maintain an ethylene pressure in the reactor of 48.05 bar. The polymerisation was continued until 1500 g monomer consumed.

The split of polymer produced during the first step to the polymer produced during the second step was thus 51/49.

The resulting polymer blend had $MFR_{21}$ of 3.4 g/10 min and a weight average molecular weight of 796 kg/mol.

The polymer blend as disclosed above was mixed with the polymer of Reference Example 1 so that the content of the polymer blend was 9.8 parts per weight and the amount of the polymer of Reference Example 1 was 84.08 parts per weight. In addition 0.22 parts per weight of Irganox B225, 0.15 parts per weight of calcium stearate and 5.75 parts per weight of a carbon black masterbatch (the calculated content of the carbon black was 2.25 parts per weight) were added. The resulting polymer composition had $MFR_5$ of 0.15 g/10 min and the viscosity measured at 747 Pa was 1330 kPas.

## Inventive Example 3

Into a reactor having a volume of 5.3 dm$^3$ were introduced 850 g propane at the room temperature and 37.4 mg polymerisation catalyst having a solid titanium component see page 26 and triethylaluminium as an activator so that the molar ratio Al/Ti=15. The reactor was temperature was set to 40 °C and 20 g of ethylene was fed into the reactor. After 4 minutes' prepolymerisation, the temperature was raised up to 50 °C and ethylene was continuously introduced into the reactor to maintain an ethylene pressure of 4.5 bar. The polymerisation was continued until 300 g monomer consumed after which reactor was depressurised and the hydrocarbons were removed.

Thereafter reactor temperature was increased to 82 °C. Then 53 L hydrogen was added, the temperature was increased to 85 °C and ethylene feed was started to maintain total pressure in the reactor of 54.8 bar. The polymerisation was continued until 230 g monomer consumed.

The split of polymer produced during the first step to the polymer produced during the second step was thus 17/83.

When the first polymerisation step was conducted individually the viscosity average molecular weight was 2600 kg/mol.

The resulting polymer blend had $MFR_{21}$ of 4.3 g/10 min.

The polymer blend as disclosed above was mixed with the polymer of Reference Example 1 so that the content of the polymer blend was 8.8 parts per weight and the amount of the polymer of Reference Example 1 was 85.08 parts per weight. In addition 0.22 parts per weight of Irganox B225, 0.15 parts per weight of calcium stearate and 5.75 parts per weight of a carbon black masterbatch (the calculated content of the carbon black was 2.25 parts per weight) were added. The resulting polymer composition had $MFR_5$ of 0.19 g/10 min and the viscosity measured at 747 Pa was 1200 kPas.

## Inventive Example 4

Into a reactor having a volume of 5.3 dm$^3$ were introduced 850 g propane at the room temperature and 106 mg polymerisation catalyst having a solid titanium component sold by BASF under the trade name of Lynx 200 and triethylaluminium as an activator so that the molar ratio Al/Ti=15. The reactor temperature was set to 40 °C and 20 g of ethylene was fed into the reactor. After 4 minutes' prepolymerisation, ethylene was continuously introduced into the reactor to maintain an ethylene pressure of 6 bar. The polymerisation was continued until 128 g monomer consumed after which reactor was depressurised and the hydrocarbons were removed.

Thereafter reactor temperature was increased to 92 °C and 850 g propane was introduced into the reactor. Then 42.5L hydrogen was added, the temperature was increased to 95 °C and ethylene feed was started to maintain an ethylene pressure in the reactor of 6 bar. The polymerisation was continued until 234 g monomer consumed.

The split of polymer produced during the first step to the polymer produced during the second step was thus 17/83.

When the first polymerisation step was conducted individually the viscosity average molecular weight was 5400 kg/mol .

The resulting polymer blend had $MFR_{2.16/190}$ of 2.3 g/10 min.

The polymer blend as disclosed above was mixed with the polymer of Reference Example 1 so that the content of the polymer blend was 12 parts per weight and the amount of the polymer of Reference Example 1 was 81.88 parts per weight. In addition 0.22 parts per weight of Irganox B225, 0.15 parts per weight of calcium stearate and 5.75 parts per weight of a carbon black masterbatch (the calculated content of the carbon black was 2.25 parts per weight) were added. The resulting polymer composition had $MFR_5$ of 0.22 g/10 min and the viscosity measured at 747 Pa was 1300 kPas.

## Inventive Example 5

Into a reactor having a volume of 5.3 dm$^3$ were introduced 850 g propane at the room temperature and 37.6 mg polymerisation catalyst having a solid titanium component see page 26 and triethylaluminium as an activator so that the molar ratio Al/Ti=15. The reactor was temperature was set to 40 °C and 20 g of ethylene was fed into the reactor. After 4 minutes' prepolymerisation, ethylene was continuously introduced into the reactor to maintain an ethylene pressure of 4 bar. The polymerisation was continued until 106 g monomer consumed after which reactor was depressurised and the hydrocarbons were removed.

Thereafter reactor temperature was increased to 82 °C. Then 56.3 L hydrogen was added, the temperature was increased to 85 °C and ethylene feed was started to maintain total pressure in the reactor of 54.8 bar. The polymerisation was continued until 229.5 g monomer consumed.

The split of polymer produced during the first step to the polymer produced during the second step was thus 13/87.

When the first polymerisation step was conducted individually the viscosity average molecular weight was 4280 kg/mol The resulting polymer blend had $MFR_5$ of 39 g/10 min.

The polymer blend as disclosed above was mixed with the polymer of Reference Example 1 so that the content of the polymer blend was 16 parts per weight and the amount of the polymer of Reference Example 1 was 77.88 parts per weight. In addition 0.22 parts per weight of Irganox B225, 0.15 parts per weight of calcium stearate and 5.75 parts per weight of a carbon black masterbatch (the calculated content of the carbon black was 2.25 parts per weight) were added.

The resulting polymer composition had MFR$_5$ of 0.29 g/10 min and the viscosity measured at 747 Pa was 940 kPas.

**Inventive Example 6**

The procedure of Inventive Example 4 was repeated except that the temperature in the first polymerisation step was 50 °C and the ethylene pressure was 3 bar.

When the first polymerisation step was conducted individually the viscosity average molecular weight was 1700 kg/mol.

The split 1$^{st}$ step/2$^{nd}$ step was 16/84 and the MFR$_5$ of the blend was 2.2 g/10 min.

The polymer blend as disclosed above was mixed with the polymer of Reference Example 1 so that the content of the polymer blend was 13 parts per weight and the amount of the polymer of Reference Example 1 was 80.88 parts per weight. In addition 0.22 parts per weight of Irganox B225, 0.15 parts per weight of calcium stearate and 5.75 parts per weight of a carbon black masterbatch (the calculated content of the carbon black was 2.25 parts per weight) were added. The resulting polymer composition had MFR$_5$ of 0.32 g/10 min and the viscosity measured at 747 Pa was 1180 kPas.

Table 1: The compositions of Examples 1 to 6.

| Materials | Example | IE1 | IE2 | IE3 | IE4 | IE5 | IE6 |
|---|---|---|---|---|---|---|---|
| Amount of bimodal polymer of Reference Example 1 (%) | | 83.62 | 84.08 | 85.08 | 81.88 | 77.88 | 80.88 |
| Irganox B225 (%) | | 0.22 | 0.22 | 0.22 | 0.22 | 0.22 | 0.22 |
| Ca-stearate (%) | | 0.15 | 0.15 | 0.15 | 0.15 | 0.15 | 0.15 |
| Carbon black masterbatch (%) | | 5.75 | 5.75 | 5.75 | 5.75 | 5.75 | 5.75 |
| Amount of blend (A) containing UHMWPE (%) | | 10.26 | 9.8 | 8.8 | 12 | 16 | 13 |

Table 2: The properties of the compositions of Examples 1 to 6

| Example | | IE1 | IE2 | IE3 | IE4 | IE5 | IE6 |
|---|---|---|---|---|---|---|---|
| MFR$_5$ | (g/10min) | 0.10 | 0.15 | 0.19 | 0.22 | 0.29 | 0.32 |
| MFR$_{21}$ | (g/10min) | 4.2 | 6.6 | 7.6 | 11 | 14 | 9.7 |
| Eta747 | (kPa·s) | 2260 | 1330 | 1200 | 1300 | 940 | 1180 |

**Claims**

1.    A process for producing a multimodal polyethylene composition comprising the following steps: (i) introducing a first polyethylene resin (A) having a weight average molecular weight Mw of from 150 to 3000 kg/mol and MFR$_5$ of not more than 60 g/10 min and comprising from 10 to 90 % of an ultra-high molecular weight polyethylene (A-1) having viscosity average molecular weight of at least 700 kg/mol into a feed port of an extruder; (ii) introducing a second polyethylene resin (B) having MFR$_5$ of from 0.15 to 1.0 g/10 min and a density of equal to or more than 945 kg/m$^3$ to equal to or less than 970 kg/m$^3$ into a feed port of the extruder; (iii) melting and mixing the first polyethylene resin (A) and the second polyethylene resin (B) in the extruder to form a multimodal polyethylene composition; (iv) recovering the multimodal polyethylene composition from the extruder; and (v) cooling and solidifying the multimodal polyethylene composition, wherein the multimodal polyethylene composition has a melt flow rate MFR$_5$ (190°C, 5 kg) of at most 1.0 g/10 min and a density of equal to or more than 935 kg/m$^3$ to equal to or less than 965 kg/m$^3$, wherein the viscosity $\eta_{747}$ and the melt flow rate MFR$_5$ measured according to ISO 1133 at 190 °C under 5 kg load follow the relationship $\eta_{747} > 1608 - 2530 \cdot MFR_5$.

2.    The process according to claim 1 wherein multimodal polymer composition has a viscosity $\eta_{747}$ of at least 700 kPa·s measured at a shear stress of 747 Pa.

3.    The process according to any one of the preceding claims wherein the polyethylene (A-1) is a homopolymer of ethylene.

4. The process according to any one of claims 1 to 3 wherein the polyethylene (A-1) is a copolymer of ethylene and one or more alpha-olefins having from 3 to 12 carbon atoms.

5. The process according to any one of the preceding claims wherein the multimodal polyethylene composition comprises from 1 to 20 % by weight of the multimodal polyethylene composition of the ultra-high molecular weight polyethylene (A-1).

6. The process according to any one of the preceding claims wherein the process comprises blending from 1 to 25 % by weight of the first polyethylene resin (A) with from 75 to 99 % by weight of the second polyethylene resin (B).

7. The process according to claim 6 wherein the process comprises blending from 3 to 20 % by weight, preferably from 4 to 15 % by weight of the first polyethylene resin (A) with from 80 to 97 % by weight, preferably from 85 to 96 % by weight of the second polyethylene resin (B).

8. The process according to any one of the preceding claims wherein the second polyethylene resin (B) is a multimodal ethylene polymer comprising from 40 to 60 % by weight of a low molecular weight ethylene homopolymer (B-1) and from 60 to 40 % by weight of a high molecular weight ethylene copolymer (B-2).

9. The process according to any one of the preceding claims wherein the multimodal polyethylene composition has $MFR_5$ of from 0.05 to 0.5 g/10 min.

10. The process according to claim 9 wherein the multimodal polyethylene composition has $MFR_{21}$ of from 1 to 20 g/10 min.

11. The process according to any one of the preceding claims comprising the steps of producing the first polyethylene resin (A) by the steps of (a) contacting ethylene and a polymerisation catalyst in a polymerisation reactor in the absence of hydrogen thereby producing the ultra-high molecular weight polyethylene (A-1); (b) contacting ethylene and a polymerisation catalyst in a polymerisation reactor in the presence of hydrogen thereby producing the polyethylene (A-2); and (c) combining the ultra-high molecular weight polyethylene (A-1) with the polyethylene (A-2) to produce the first polyethylene resin (A).

12. The process according to claim 11 wherein the steps (a) and (b) are conducted as separate steps in a cascaded polymerisation process in any order and wherein the subsequent polymerisation step is conducted in the presence of the polymer produced in the preceding polymerisation step.

13. The process according to claim 12 wherein the polymerisation step (a) precedes the polymerisation step (b).

14. The process according to claim 12 or 13 wherein the first polyethylene resin (A) and the second polyethylene resin (B) are introduced as powders into the feed port of the extruder.

**Patentansprüche**

1. Verfahren zum Herstellen einer multimodalen Polyethylenzusammensetzung, umfassend die folgenden Schritte: (i) Einführen von einem ersten Polyethylenharz (A), das ein Gewichtsmittel des Molekulargewichts Mw von 150 bis 3000 kg/mol und einen $MFR_5$ von nicht mehr als 60 g/10 min aufweist und 10 bis 90 % von einem ultrahochmolekularen Polyethylen (A-1) umfasst, das ein Viskositätsmittel des Molekulargewichts von mindestens 700 kg/mol aufweist, in eine Zufuhröffnung von einem Extruder; (ii) Einführen von einem zweiten Polyethylenharz (B), das einen $MFR_5$ von 0,15 bis 1,0 g/10 min und eine Dichte von gleich zu oder mehr als 945 kg/m$^3$ bis gleich zu oder weniger als 970 kg/m$^3$ aufweist, in eine Zufuhröffnung des Extruders; (iii) Schmelzen und Mischen von dem ersten Polyethylenharz (A) und dem zweiten Polyethylenharz (B) in dem Extruder, um eine multimodale Polyethylenzusammensetzung zu bilden; (iv) Gewinnen von der multimodalen Polyethylenzusammensetzung aus dem Extruder; und (v) Kühlen und Verfestigen von der multimodalen Polyethylenzusammensetzung, wobei die multimodale Polyethylenzusammensetzung einen Schmelzflussindex $MFR_5$ (190 °C, 5 kg) von höchstens 1,0 g/10 min und eine Dichte von gleich zu oder mehr als 935 kg/m$^3$ bis gleich zu oder weniger als 965 kg/m$^3$ aufweist, wobei die Viskosität $\eta 747$ und der Schmelzschlussindex $MFR_5$, gemessen gemäß ISO 1133 bei 190 °C unter 5 kg Last, der Beziehung $\eta 747 > 1608 - 2530 \cdot MFR_5$ folgen.

2. Verfahren nach Anspruch 1, wobei die multimodale Polymerzusammensetzung eine Viskosität $\eta_{747}$ von mindestens

700 kPa·s aufweist, gemessen bei einer Scherspannung von 747 kPa.

3. Verfahren nach einem der vorhergehenden Ansprüche, wobei das Polyethylen (A-1) ein Homopolymer von Ethylen ist.

4. Verfahren nach einem der Ansprüche 1 bis 3, wobei das Polyethylen (A-1) ein Copolymer von Ethylen und einem oder mehreren Alpha-Olefinen mit 3 bis 12 Kohlenstoffatomen ist.

5. Verfahren nach einem der vorhergehenden Ansprüche, wobei die multimodale Polyethylenzusammensetzung zwischen 1 und 20 Gew.-% von der multimodalen Polyethylenzusammensetzung des ultrahochmolekularen Polyethylens (A-1) umfasst.

6. Verfahren nach einem der vorhergehenden Ansprüche, wobei das Verfahren das Mischen von 1 bis 25 Gew.-% von dem ersten Polyethylenharz (A) mit 75 bis 99 Gew.-% von dem zweiten Polyethylenharz (B) umfasst.

7. Verfahren nach Anspruch 6, wobei das Verfahren das Mischen von 3 bis 20 Gew.-%, vorzugsweise von 4 bis 15 Gew.-% von dem ersten Polyethylenharz (A) mit 80 bis 97 Gew.-%, vorzugsweise 85 bis 96 Gew.-% von dem zweiten Polyethylenharz (B) umfasst.

8. Verfahren nach einem der vorhergehenden Ansprüche, wobei das zweite Polyethylenharz (B) ein multimodales Ethylenpolymer ist, das 40 bis 60 Gew.-% von einem niedermolekularen Ethylenhomopolymer (B-1) und 60 bis 40 Gew.-% von einem hochmolekularen Ethylencopolymer (B-2) umfasst.

9. Verfahren nach einem der vorhergehenden Ansprüche, wobei die multimodale Polyethylenzusammensetzung einen $MFR_5$ von 0,05 bis 0,5 g/10 min aufweist.

10. Verfahren nach Anspruch 9, wobei die multimodale Polyethylenzusammensetzung einen $MFR_{21}$ von 1 bis 20 g/10 min aufweist.

11. Verfahren nach einem der vorhergehenden Ansprüche, umfassend die Schritte des Herstellens von dem ersten Polyethylenharz (A) durch die folgenden Schritte: (a) Kontaktieren von Ethylen und einem Polymerisationskatalysator in einem Polymerisationsreaktor bei Abwesenheit von Wasserstoff, wodurch das ultrahochmolekulare Polyethylen (A-1) hergestellt wird; (b) Kontaktieren von Ethylen und einem Polymerisationskatalysator in einem Polymerisationsreaktor in Gegenwart von Wasserstoff, wodurch das Polyethylen (A-2) hergestellt wird; und (c) Vereinen von dem ultrahochmolekularen Polyethylen (A-1) mit dem Polyethylen (A-2), um das erste Polyethylenharz (A) herzustellen.

12. Verfahren nach Anspruch 11, wobei die Schritte (a) und (b) als getrennte Schritte in einem kaskadierten Polymerisationsverfahren in irgendeiner Reihenfolge durchgeführt werden und wobei der anschließende Polymerisationsschritt in Gegenwart des Polymers durchgeführt wird, das in dem vorausgehenden Polymerisationsschritt hergestellt wurde.

13. Verfahren nach Anspruch 12, wobei der Polymerisationsschritt (a) dem Polymerisationsschritt (b) vorausgeht.

14. Verfahren nach Anspruch 12 oder 13, wobei das erste Polyethylenharz (A) und das zweite Polyethylenharz (B) als Pulver in die Zufuhröffnung des Extruders eingeführt werden.

**Revendications**

1. Procédé pour produire une composition de polyéthylène multimodal comprenant les étapes suivantes : (i) introduction d'une première résine de polyéthylène (A) ayant une masse moléculaire moyenne en masse Mw de 150 à 3 000 kg/mol et un $MFR_5$ non supérieur à 60 g/10 min et comprenant de 10 à 90 % d'un polyéthylène de masse moléculaire ultra élevée (A-1) ayant une masse moléculaire moyenne en viscosité d'au moins 700 kg/mol dans un orifice d'alimentation d'une extrudeuse ; (ii) introduction d'une deuxième résine de polyéthylène (B) ayant un $MFR_5$ de 0,15 à 1,0 g/10 min et une masse volumique comprise entre 945 kg/m$^3$ et 970 kg/m$^3$ dans un orifice d'alimentation de l'extrudeuse ; (iii) fusion et mélange de la première résine de polyéthylène (A) et de la deuxième résine de polyéthylène (B) dans l'extrudeuse pour former une composition de polyéthylène multimodal ; (iv) récupération de la composition de polyéthylène multimodal à partir de l'extrudeuse ; et (v) refroidissement et solidification de la composition de polyéthylène multimodal, la composition de polyéthylène multimodal ayant un indice de fluage $MFR_5$

(190 °C, 5 kg) d'au plus 1,0 g/10 min et une masse volumique comprise entre 935 kg/m$^3$ et 965 kg/m$^3$, la viscosité $\eta_{747}$ et l'indice de fluage MFR$_5$, mesurés selon la norme ISO 1133 à 190 °C sous une charge de 5 kg, suivant la relation $\eta_{747}$ > 1 608 - 2 530 MFR$_5$.

2. Procédé selon la revendication 1, dans lequel la composition de polyéthylène multimodal a une viscosité n$_{747}$, mesurée à une contrainte de cisaillement de 747 Pa, d'au moins 700 kPa.s.

3. Procédé selon l'une quelconque des revendications précédentes, dans lequel le polyéthylène (A-1) est un homopolymère d'éthylène.

4. Procédé selon l'une quelconque des revendications 1 à 3, dans lequel le polyéthylène (A-1) est un copolymère d'éthylène et d'une ou plusieurs alpha-oléfines ayant 3 à 12 atomes de carbone.

5. Procédé selon l'une quelconque des revendications précédentes, dans lequel la composition de polyéthylène multimodal comprend de 1 à 20 % en poids de la composition de polyéthylène multimodal du polyéthylène de masse moléculaire ultraélevée (A-1).

6. Procédé selon l'une quelconque des revendications précédentes, lequel procédé comprend le mélange de 1 à 25 % en poids de la première résine de polyéthylène (A) avec de 75 à 99 % en poids de la deuxième résine de polyéthylène (B).

7. Procédé selon la revendication 6, lequel procédé comprend le mélange de 3 à 20 % en poids, de préférence de 4 à 15 % en poids, de la première résine de polyéthylène (A) avec de 80 à 97 % en poids, de préférence de 85 à 96 % en poids, de la deuxième résine de polyéthylène (B).

8. Procédé selon l'une quelconque des revendications précédentes, dans lequel la deuxième résine de polyéthylène (B) est un polymère d'éthylène multimodal comprenant de 40 à 60 % en poids d'un homopolymère d'éthylène de faible masse moléculaire (B-1) et de 60 à 40 % en poids d'un copolymère d'éthylène de masse moléculaire élevée (B-2).

9. Procédé selon l'une quelconque des revendications précédentes, dans lequel la composition de polyéthylène multimodal a un MFR$_5$ de 0,05 à 0,5 g/10 min.

10. Procédé selon la revendication 9, dans lequel la composition de polyéthylène multimodal a un MFR21 de 1 à 20 g/10 min.

11. Procédé selon l'une quelconque des revendications précédentes, comprenant les étapes de production de la première résine de polyéthylène (A) par les étapes de (a) mise en contact d'éthylène et d'un catalyseur de polymérisation dans un réacteur de polymérisation en l'absence d'hydrogène, ce qui produit ainsi le polyéthylène de masse moléculaire ultra élevée (A-1) ; (b) mise en contact d'éthylène et d'un catalyseur de polymérisation dans un réacteur de polymérisation en présence d'hydrogène, ce qui produit ainsi le polyéthylène (A-2) ; et (c) combinaison du polyéthylène de masse moléculaire ultraélevée (A-1) avec le polyéthylène (A-2) pour produire la première résine de polyéthylène (A).

12. Procédé selon la revendication 11, dans lequel les étapes (a) et (b) sont mises en œuvre sous la forme d'étapes séparées dans un procédé de polymérisation en cascade dans n'importe quel ordre, et dans lequel l'étape de polymérisation subséquente est mise en œuvre en présence du polymère produit dans l'étape de polymérisation précédente.

13. Procédé selon la revendication 12, dans lequel l'étape de polymérisation (a) précède l'étape de polymérisation (b).

14. Procédé selon la revendication 12 ou 13, dans lequel la première résine de polyéthylène (A) et la deuxième résine de polyéthylène (B) sont introduites sous la forme de poudres dans l'orifice d'alimentation de l'extrudeuse.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0022040 A
- WO 2007022908 A
- US 20040005424 A
- EP 2743305 A1
- WO 9619503 A
- WO 9632420 A
- US 4582816 A
- US 3405109 A
- US 3324093 A
- EP 479186 A
- US 5391654 A
- US 3374211 A
- US 3242150 A

- EP 1310295 A
- EP 891990 A
- EP 1415999 A
- EP 1591460 A
- WO 2007025640 A
- EP 688794 A
- WO 9951646 A
- WO 0155230 A
- WO 2005118655 A
- EP 810235 A
- WO 2006063771 A
- EP 428054 A

**Non-patent literature cited in the description**

- Rauwendaal, Polymer Extrusion. Hanser Publishers, 1986, 439
- **HEINO, E.L** ; **LEHTINEN, A** ; **TANNER J.** ; **SEPPÄLÄ, J** ; **NESTE OY** ; **PORVOO** ; **FINLAND**. Rheological characterization of polyethylene fractions. *Theor. Appl. Rheol., Proc. Int. 10 Congr. Rheol*, 1992, vol. 1, 360-362

- Definition of terms relating to the non-ultimate mechanical properties of 15 polymers. *Pure & Appl. Chem.*, 1998, vol. 70 (3), 701-754